# EUROPÄISCHE PATENTSCHRIFT

(11) **EP 4 387 919 B1**
(45) Veröffentlichungstag und Bekanntmachung des Hinweises auf die Patenterteilung: **29.04.2026**
(21) Anmeldenummer: 22751685.3
(22) Anmeldetag: 14.07.2022
(51) Int. Cl.: B67C 3/00

(54) **VERFAHREN ZUM BETREIBEN MECHATRONISCHER FUNKTIONSMODULE ZUM HERSTELLEN, BEHANDELN, INSPIZIEREN UND/ODER TRANSPORTIEREN VON BEHÄLTERN UND PRODUKTIONSANLAGE MIT DEN FUNKTIONSMODULEN**
METHOD FOR OPERATING MECHATRONIC FUNCTIONAL MODULES FOR THE PRODUCTION, PROCESSING, INSPECTION AND/OR TRANSPORT OF CONTAINERS, AND PRODUCTION SYSTEM HAVING THE FUNCTIONAL MODULES
PROCÉDÉ POUR FAIRE FONCTIONNER DES MODULES FONCTIONNELS MÉCATRONIQUES POUR LA PRODUCTION, LE TRAITEMENT, L'INSPECTION ET/OU LE TRANSPORT DE CONTENANTS, ET SYSTÈME DE PRODUCTION COMPRENANT LES MODULES FONCTIONNELS

(30) Priorität: 17.08.2021 DE 102021121306
(43) Veröffentlichungstag der Anmeldung: 26.06.2024
(73) Patentinhaber: Krones AG, 93073 Neutraubling (DE)
(72) Erfinder: WESS, Bernhard, 93073 Neutraubling (DE); PILNEY, Elisabeth, 93073 Neutraubling (DE); AMANN, Ottmar, 93073 Neutraubling (DE); KELLHAMMER, Thomas, 93073 Neutraubling (DE); TESAR, Veronika, 93073 Neutraubling (DE); KASBERGER, Korbinian, 93073 Neutraubling (DE); FISCHER, Florian, 93073 Neutraubling (DE); JEZIOROWSKI, Andreas, 93073 Neutraubling (DE)
(74) Vertreter: Grünecker Patent- und Rechtsanwälte PartG mbB
(86) Internationale Anmeldenummer: PCT/EP2022/069734
(87) Internationale Veröffentlichungsnummer: WO 2023/020754

(56) Entgegenhaltungen:
- ASHTARI TALKHESTANI BEHRANG ET AL: "An architecture of an Intelligent Digital Twin in a Cyber-Physical Production System", AUTOMATISIERUNGSTECHNIK - AT., vol. 67, no. 9, 1 September 2019 (2019-09-01), DE, pages 762 - 782, XP055855422, ISSN: 0178-2312, Retrieved from the Internet <URL:https://www.degruyter.com/document/doi/10.1515/auto-2019-0039/html> DOI: 10.1515/auto-2019-0039
- STEFAN BOSCHERT ET AL: "Next Generation Digital Twin", TMCE 2018, 7 May 2018 (2018-05-07), XP055971278, Retrieved from the Internet <URL:https://www.researchgate.net/profile/Stefan-Boschert/publication/325119950_Next_Generation_Digital_Twin/links/5af952ca0f7e9b026bf6e553/Next-Generation-Digital-Twin.pdf> [retrieved on 20221014]

## Beschreibung

Die Erfindung betrifft ein Verfahren zum Betreiben mechatronischer Funktionsmodule zum Herstellen, Behandeln, Inspizieren und/oder intermodularen Transportieren von Behältern für Flüssigprodukte in einer Produktionsanlage und eine Produktionsanlage mit derartigen Funktionsmodulen.

Produktionsanlagen, insbesondere Abfüllanlagen zur Abfüllung von Getränken oder dergleichen Flüssigproduktionen in Behältern, umfassen bekanntermaßen eine Vielzahl mechatronischer Funktionsmodule zum Herstellen, Behandeln, Inspizieren und/oder intermodularen Transportieren der Behälter. Den mechatronischen Funktionsmodulen ist dann jeweils ein bestimmter Produktionsprozess zugeordnet, wie beispielsweise das Streckblasen von Kunststoffbehältern, die Etikettierung der Behälter, die Abfüllung der Flüssigprodukte oder der Transport zwischen einzelnen Funktionsmodulen.

Derartige mechatronische Funktionsmodule weisen bekanntermaßen elektronische Steuereinrichtungen auf, die zum einen der Laufzeitsteuerung des jeweiligen Funktionsmoduls, also der Steuerung seines Arbeitsbetriebs unter Einbeziehen der dafür nötigen Aktoren, Sensoren, Frequenzumrichter oder dergleichen Komponenten dienen. Ferner geben die Steuereinrichtungen Maschinenparameter und Behandlungsparameter des jeweiligen Funktionsmoduls vor, beispielsweise für dessen sortenspezifischen Arbeitsbetrieb und für die Diagnose von Fehlfunktionen, und ermöglichen zudem eine Kommunikation mit zentralen und/oder dezentralen Steuereinrichtungen der Produktionsanlage, gegebenenfalls mit anderen Funktionsmodulen.

Als nachteilig hat sich zum einen herausgestellt, dass für Wartungsarbeiten benötigte Informationen wie Schaltpläne, Stücklisten und Konstruktionsdaten im Bereich des jeweiligen Funktionsmoduls nicht vorliegen, sondern in der Regel von einem zentralen Speicherort übertragen werden müssen. Dies ist umständlich, fehleranfällig und kann durch Kommunikationsanforderungen zwischen dem Aufstellungsort und dem Speicherort zusätzlich erschwert werden.

Zudem können die Funktionsmodule von ihren Steuereinrichtungen nur relativ unflexibel auf geänderte Produktionsbedingungen angepasst oder im laufenden Betrieb optimiert werden, da vor Ort nur vergleichsweise geringe Datenmengen vorliegen, die im Wesentlichen nur die Funktionen und Parameter des jeweiligen Funktionsmoduls umfassen. Demgegenüber fehlt in der Regel Information zur Produktionsumgebung der Funktionsmodule, also zu vor- oder nachgeschalteten Funktionsmodulen, zum Produktfluss in der jeweiligen Produktionsanlage. Derartige Information muss dann gegebenenfalls umständlich aus einer zentralen Datenquelle abgefragt werden.

ASHTARI TALKHESTANI BEHRANG ET AL: "An architecture of an Intelligent Digital Twin in a Cyber-Physical Production System", AUTOMATISIERUNGSTECHNIK - AT., Bd. 67, Nr. 9, 1. September 2019, Seiten 762-782, XP055855422, beschreibt die Architektur eines Simulationsmodells im Sinne digitaler Zwillinge von mechatronischen Funktionsmodulen. Demnach werden digitale Kopien der einzelnen mechatronischen Funktionsmodule in wenigstens einem digitalen Zwilling der Produktionsanlage zusammengefasst, wobei dieser die Fähigkeit zur Simulation der Funktionsmodule, der Synchronisierung mit diesen und der Verarbeitung von Daten beinhaltet, die von den Funktionsmodulen geliefert werden. Wenigstens ein derartiger digitaler Zwilling kann zudem in einen intelligenten digitalen Zwilling integriert werden, der zusätzlich eine künstliche Intelligenz aufweisen muss. Hierfür wird zwischen einer physikalischen Ebene mit den einzelnen Funktionsmodulen und einer Cyber-Ebene mit dem wenigstens einen digitalen Zwilling unterschieden. Das System mit den digitalen Zwillingen kann auf einem Rechner zentral und somit außerhalb der einzelnen Funktionsmodule installiert werden. Die von den mechatronischen Funktionsmodulen gelieferten Daten können an eine Daten-Cloud übergeben werden. Das System mit den digitalen Zwillingen hat von dort Zugriff auf diese Daten und kann zudem ebenso in eine cloud-basierte Umgebung integriert werden.

Es besteht daher Bedarf für Verfahren zum Betreiben mechatronischer Funktionsmodule und für damit ausgestattete Produktionsanlagen, bei denen sich der Aufwand für Instandhaltungsmaßnahmen und/oder sortenspezifische Produktionsanpassungen und die Optimierung des Produktionsablaufs im Zusammenspiel der Funktionsmodule verbessern lassen.

Wenigstens eine der voranstehend genannten Aufgaben wird mit einem Verfahren gemäß Anspruch 1 und mit einer Produktionsanlage gemäß Anspruch 8 gelöst. Vorteilhafte Ausführungsformen sind in den Unteransprüchen angegeben.

Das beschriebene Verfahren dient zum Betreiben mechatronischer Funktionsmodule zum Herstellen, Behandeln, Inspizieren und/oder intermodularen Transportieren von Behältern für Flüssigprodukte, insbesondere Getränke, in einer Produktionsanlage, insbesondere Abfüllanlage. Hierfür hält man in den Funktionsmodulen jeweils individuell zugehörige initiale Konstruktionsdaten und Spezifikationsdaten und initiale topologische Daten in maschinell auslesbarer Form vor, wobei die topologischen Daten wenigstens den intermodularen Produktfluss in der Produktionsanlage und die Kommunikation zwischen den Funktionsmodulen betreffen. Ferner werden die Funktionsmodule unter Einbeziehung der initialen topologischen Daten und vorzugsweise der initialen Konstruktionsdaten und/oder Spezifikationsdaten gesteuert.

Die im jeweiligen Funktionsmodul gespeicherten initialen Konstruktions- und Spezifikationsdaten erleichtern / ermöglichen eine Instandhaltung des jeweiligen Funktionsmoduls ohne Abfrage diesbezüglicher Information von einer zentralen Datenquelle. Die im Funktionsmodul gespeicherten topologischen Daten erleichtern / ermöglichen beispielsweise anhand des dann bekannten Produktflusses eine Produktionsoptimierung unter Einbeziehung insbesondere sämtlicher am Produktfluss beteiligter Funktionsmodule, also unter Berücksichtigung deren prozesstechnische Wechselwirkung untereinander. Zudem wird die dafür nötige Kommunikation zwischen den Funktionsmodulen durch die lokal / dezentral vorgegebenen topologischen Daten im Funktionsmodul erleichtert, insbesondere durch direkten intermodularen Verbindungsaufbau auf einem initial vorgegebenen Kommunikationspfad.

Unter mechatronischen Funktionsmodulen sind maschinelle Einheiten wie Behandlungsmaschinen, davon umfasste Behandlungsaggregate und/oder Inspektionseinheiten zu verstehen, die jeweils einem bestimmten Produktionsprozess zugeordnet sind, wie beispielsweise dem Vorwärmen von Vorformlingen, den Streckblasen oder Etikettieren von Behältern, deren Inspektion oder dergleichen.

Unter initialen Daten sind solche zu verstehen, die konstruktionsbedingt und gegebenenfalls auch produktspezifisch beim jeweiligen Produktionsstart bereits festgelegt / vorgegeben sind. Initiale Daten werden beispielsweise bei der Inbetriebnahme einzelner Funktionsmodule und/oder der sie umfassenden Behandlungsmaschinen / Produktionsanlage in den Funktionsmodulen gespeichert und/oder bei zugehörigen Instandhaltungsmaßnahmen aktualisiert.

Unter einer maschinell auslesbaren Datenform ist zu verstehen, dass die beschriebenen Daten in den Funktionsmodulen in einem standardisierten Datenformat vorliegen und/oder mittels standardisierter Kommunikationsprotokolle ausgelesen werden können. Beispielsweise derart, dass die initialen Konstruktions- und Spezifikationsdaten sowie die initialen topologischen Daten von einem mobilen Endgerät und/oder von einer am Funktionsmodul vorhandenen Bedien- und Ausgabeeinheit ausgelesen und angezeigt werden können. Dies ermöglicht vor Ort einen unkomplizierten Zugriff auf die im Funktionsmodul vorgehaltenen Informationen.

Die topologischen Daten betreffen zum eigenständigen Verbindungsaufbau der Funktionsmodule untereinander wenigstens Informationen, welche die Identität und Adresse der Funktionsmodule umfassen und können ferner Informationen darüber betreffen, welche der Funktionsmodule jeweils füreinander relevante und/oder priorisierte Kommunikationspartner sind. Der Kommunikationsaufbau ist somit ohne Aushandeln von Kommunikationsverbindungen im Sinne eines "Online-Suchens" im jeweiligen Kommunikationsnetzwerk allein auf der Grundlage der in den Funktionsmodulen gespeicherten Information direkt und automatisch möglich. Dies erleichtert die intermodulare Optimierung von Produktionsabläufen, also nicht nur die Optimierung der einzelnen Funktionsmodule für sich genommen, sondern auch deren Zusammenspiel im Produktionsbetrieb.

Vorzugsweise enthalten die initialen Konstruktionsdaten, Spezifikationsdaten und topologischen Daten wenigstens zwei der folgenden Informationen: ein 3D-CAD-Modell des Funktionsmoduls; ein 3D-Modell zur Finite-Elemente-Simulation und/oder zur Simulation von Frequenzverhalten im Funktionsmodul; einen elektrischen Schaltplan des Funktionsmoduls insbesondere mit technischen Spezifikationen zugehöriger Bauteile; elektrische Verbindungen von Baugruppen des Funktionsmoduls; ein R&I-Fließschema der zugehörigen Behandlungsmaschine und/oder Produktionsanlage insbesondere mit technischen Spezifikationen zugehöriger Funktionselemente und/oder deren gegenseitiger Abhängigkeiten; einen Anordnungsplan der zugehörigen Behandlungsmaschine und/oder Produktionsanlage insbesondere mit technischen Spezifikationen zugehöriger Maschinenteile / Anlagenteile; Stücklisten mechanischer, elektrischer, pneumatischer und/oder hydraulischer Bauteile des Funktionsmoduls; technische Spezifikationen der zu verarbeitenden Behälter mit zugehörigen Ausstattungsobjekten, Hilfsstoffen und/oder Abfüllprodukten; Instandhaltungsdokumentation des Funktionsmoduls, der zugehörigen Behandlungsmaschine und/oder Produktionsanlage; und Spezifikation des Lebenszyklus des Funktionsmoduls.

Der Steuereinrichtung / dem Laufzeitsystem kann somit umfassendes Wissen zu initialen Konstruktions- und Spezifikationsdaten sowie zu topologischen Daten bereitgestellt werden, also im Wesentlichen Wissen, das aus dem vorgelagertem Entwicklungsprozess, der Konstruktion und der Installation des jeweiligen Funktionsmoduls und/oder der zugehörigen Produktionsanlage stammt. Dies verbessert die dezentrale und intermodulare Optimierung der Produktionsprozesse der einzelnen Funktionsmodule und ermöglicht zudem eine zielgerichtete und zeitsparende Instandhaltung der einzelnen Funktionsmodule.

Vorzugsweise werden zumindest ein Teil der initialen Konstruktions- und Spezifikationsdaten sowie der topologischen Daten in einem digitalen Systemmodell der zugehörigen Behandlungsmaschine und/oder Produktionsanlage zusammengefasst, wobei das Systemmodell wenigstens vier, insbesondere alle, am Produktfluss beteiligten Funktionsmodelle umfasst und wenigstens zwei der folgenden Informationen verarbeitet: Datenpunkte von Sensoren und Aktoren der Funktionsmodule sowie der zugehörigen Datenflüsse untereinander; Katalog mit obligatorischen und optionalen Funktionen der Funktionsmodule und mit gegenseitigen Abhängigkeiten ihrer Funktionsumfänge; Topologie der Funktionsmodule untereinander und/oder bezüglich der sie umfassenden Behandlungsmaschinen und/oder Produktionsanlage; Schnittstellenanforderungen der Funktionsmodule; und Anforderungen zur Versorgung der Funktionsmodule mit elektrischer Energie; Medien und Verbrauchsmitteln.

Das Systemmodell umfasst vorzugsweise alle zur intermodularen Kommunikation notwendigen Informationen. Im Systemmodell festgelegte Identitäten und Kommunikationsadressen können an die jeweiligen Funktionsmodule übertragen und dort vorgehalten werden. Auf der Basis der derart dezentral abgelegten Kommunikationsinformationen aus dem Systemmodell ist ein gezielter Verbindungsaufbau und Datenaustausch zwischen einander als Kommunikationspartner zugeordneten Funktionsmodulen automatisch und auf direktem Wege möglich, also ohne jeweiliges Aushandeln von Netzwerkverbindungen.

Die genannten Datenpunkte können als Dateneingänge oder Datenausgänge an Sensoren, Aktoren, Frequenzumrichtern, Controllern oder dergleichen verstanden werden.

An das jeweilige Funktionsmodul kann somit umfassende Kenntnis über die Topologie der Produktionsanlage und des diese abbildenden Systemmodells übertragen werden, so dass die einzelnen Funktionsmodule nicht nur lokal auf sich selbst begrenzte Anpassungen und Optimierungen des jeweiligen Produktionsprozesses vornehmen können, sondern auch übergeordnete Optimierungsziele unterstützen, wie beispielsweise eine Energieeinsparung, eine Qualitätsoptimierung oder dergleichen.

In den Funktionsmodulen kann man ferner jeweils individuell zugehörige aktuelle Zustandsdaten der Funktionsmodule vorhalten und/oder verarbeiten, wobei die Funktionsmodule dann unter Einbeziehung der aktuellen Zustandsdaten gesteuert werden. Diese enthalten dann wenigstens zwei der folgenden Informationen: aktueller Betriebszustand, aktuelle Betriebsart und/oder aktuelle Störungen des Funktionsmoduls; Bedienerhinweise und/oder Bedieneranweisungen; aktuelle Prognosen zu Materialbedarf und/oder Wartungszeitpunkten; aktuelle Handlungsempfehlungen zum Produktionsablauf; aktuelle Software-Versionsdaten; aktuelle Diagnosedaten; aktuelle Leistungs- und/oder Verbrauchsdaten, wie beispielsweise aktueller Energie- und Medienverbrauch und/oder Wirkungsgrad.

Somit lässt sich das initiale Wissen aus den vorgelagerten Entwicklungs- und Konstruktionsprozessen mit aktuellem Wissen aus dem laufenden Betrieb kombinieren und/oder abgleichen, um beispielsweise Instandhaltungsmaßnahmen und/oder Produktionsoptimierungen besonders zielgerichtet vornehmen zu können.

Ferner können in den Funktionsmodulen jeweils individuell zugehörige historische Daten des Funktionsmoduls vorgehalten und/oder verarbeitet werden, wobei die Funktionsmodule dann unter Einbeziehung der historischen Daten gesteuert werden. Diese enthalten dann wenigstens zwei der folgenden über mehrere Produktionsabläufe angesammelten Informationen: elektronisches Logbuch des Funktionsmoduls; KI-Trainingsparametersätze; Kl-Lernergebnisse; Grenzwerte von Maschinenparametern und zugehörige Betriebszustände; Schaltspiele; Lastwechsel; Temperaturverläufe; Kommunikationsauslastung; Kl-Erfahrungswissen aus Interaktionen mit Bedienern; Ursachen-Fehler-Zusammenhänge; Langzeitdaten zu Energie- und Medienverbrauch und/oder Wirkungsgrad.

Somit könne auch über mehrere Produktionschargen angesammelte Daten und/oder aus selbstlernenden Prozesse gewonnene Daten, also solche, die auf der Grundlage von KI (Künstliche Intelligenz) gewonnen wurden, in die jeweiligen Anpassungs- und Optimierungsaufgaben dezentral am jeweiligen Funktionsmodul einbezogen werden.

Die Funktionsmodule können sich auf der Grundlage der individuell zugehörigen initialen Konstruktions- und Spezifikationsdaten sowie der topologischen Daten steuerungstechnisch jeweils selbsttätig konfigurieren, diagnostizieren, organisieren, optimieren, schützen und/oder heilen.

Unter einer Selbstkonfiguration ist dann zu verstehen, dass im Funktionsmodul Datenwissen über sich selbst und über eigenständige Veränderung vorgehalten wird und auf dieser Grundlage beispielsweise von einer Basiskonfiguration auf bestimmte Produktionskonfigurationen oder zwischen solchen maschinell gewechselt wird.

Unter einer Selbstdiagnose ist zu verstehen, dass im Funktionsmodul Datenwissen über sich selbst vorgehalten und auf dieser Grundlage sein Betriebszustand recherchiert und/oder berechnet wird und eigenständig erklärt werden kann. Insbesondere können dann vom Modul selbstständig Lösungsvorschläge erstellt und/oder ausgewählt werden.

Unter einer Selbstorganisation ist eine intramodulare Kombination der Selbstkonfiguration und der Selbstdiagnose zu verstehen mit dem Ergebnis einer Anpassung von prozesstechnischen und/oder programmtechnischen Abläufen, insbesondere automatisch im Verbund mit anderen Funktionsmodulen.

Unter einer Selbstoptimierung kann ebenso eine intramodulare Kombination der Selbstkonfiguration und Selbstdiagnose verstanden werden, die in einer selbstständigen Anpassung der Konfiguration zur Prozessoptimierung resultiert.

Unter einem Selbstschutz kann ebenso eine intramodulare Kombination der Selbstkonfiguration und Selbstdiagnose verstanden werden mit dem Resultat, dass vom Funktionsmodul selbstständig Schutzmaßnahmen beispielsweise gegenüber vorhersehbaren Fehlerzuständen eingeleitet werden.

Unter einer Selbstheilung ist zu verstehen, dass beispielsweise Selbstdiagnose und Selbstkonfiguration intramodular so miteinander kombiniert werden, dass Reparaturmaßnahmen insbesondere von nicht vorhersehbaren Fehlerzuständen von dem jeweiligen Funktionsmodul selbstständig eingeleitet und/oder durchgeführt werden können.

Das hierfür nötige Wissen über sich selbst erhält das Funktionsmodul beispielsweise anhand der initialen Konstruktions- und Spezifikationsdaten, also beispielsweise anhand von Anforderungen, Begrenzungen, intermodularen Abhängigkeiten, der übergeordneten Konfiguration der das Funktionsmodul umfassenden Behandlungsmaschine und/oder Produktionsanlage, anhand von Sollwerten, Sollbelastungen, modulübergreifenden Beschreibungen, Leistungsdaten, Toleranzen, Lebensdauer-Daten, Logbuchdaten oder dergleichen.

Damit lassen sich dezentral sowohl Anpassungen und Optimierungen der jeweiligen Funktionsmodule als auch der Behandlungsmaschine und/oder Produktionsanlage insgesamt im Zusammenhang untereinander flexibel für unterschiedliche Betriebsbedingungen und Produktionsanforderungen vornehmen.

Die beschriebene Produktionsanlage ist insbesondere eine Abfüllanlage und umfasst mechatronische Funktionsmodule zum Herstellen, Behandeln, Inspizieren und/oder intermodularen Transportieren von Behältern für Flüssigprodukte, insbesondere Getränke, also zum Transportieren zwischen den einzelnen Funktionsmodulen. Die Funktionsmodule umfassen jeweils: eine Speichereinrichtung mit darin jeweils maschinell auslesbar abgelegten, individuell zugehörigen initialen Konstruktions- und Spezifikationsdaten des Funktionsmoduls und mit topologischen Daten wenigstens betreffend den Produktfluss in der Produktionsanlage und die Kommunikation zwischen den Funktionsmodulen. Die topologischen Daten betreffen zum eigenständigen Verbindungsaufbau der Funktionsmodule untereinander wenigstens Informationen, welche die Identität und Adresse der Funktionsmodule umfassen. Ferner umfassen die Funktionsmodule jeweils eine Steuereinrichtung zur Laufzeitsteuerung des Funktionsmoduls unter Einbeziehung der topologischen Daten und vorzugsweise der initialen Konstruktionsdaten und/oder Spezifikationsdaten gemäß dem Verfahren nach wenigstens einer der beschriebenen Ausführungsformen.

Damit lassen sich die bezüglich des Anspruchs 1 beschriebenen Vorteile erzielen.

Die Funktionsmodule können wenigstens zwei der folgenden Modultypen umfassen: Heizmodul zum Erwärmen von Vorformlingen oder Behältern; Streckblasmodul zum Ausformen der Behälter; Kühlmodul zum Kühlen der Behälter; Wendemodul zum Überkopfwenden der Behälter; Beschichtungsmodul zur Innenbeschichtung der Behälter; Druckmodul zum Bedrucken der Behälter; Etikettiermodul zum Etikettieren der Behälter; Inspektionsmodul zum Inspizieren der Behälter; Reinigungsmodul zum Reinigen der Behälter; Füllmodul zum Abfüllen der Flüssigprodukte in die Behälter; und/oder Verschließmodul zum Verschließen der befüllten Behälter.

Die Funktionsmodule können ferner wenigstens einen der folgenden Modultypen umfassen: Transportband insbesondere mit Sklaven zur Behälteraufnahme; Linearmotor-Transportsystem; Transportkarussell insbesondere mit Behälterklammern; und Umgebungs- Transportstrecke.

Die unterschiedlichen genannten Modultypen lassen sich in der Produktionsanlage mit den beschriebenen Verfahren auf besonders effektive und effiziente Weise steuern und instand halten.

Die Steuereinrichtung kann eine elektronische Verarbeitungseinheit umfassen, insbesondere mit Internet-of-Things-Funktionalität, die zur Verarbeitung der initialen Konstruktions- und Spezifikationsdaten des Funktionsmoduls und topologischen Daten und insbesondere von individuell zugehörigen aktuellen Zustandsdaten des Funktionsmoduls und/oder individuell zugehörigen historischen Daten des Funktionsmoduls programmiert ist. Die Verarbeitungseinheit ist dann beispielsweise an ein API (Application Programming Interface) angeschlossen, das beispielsweise mit einzelnen Funktionsmodulen kommunizieren kann, die Verbindung zu einer Cloud herstellt, die Verbindung zu einem Mensch-Maschine-Interface herstellt und/oder die Anbindung an eine elektronische Verkaufsplattform und/oder einen Analyse-Service herstellt. Die Produktionsanlage umfasst vorzugsweise ein Kommunikationsnetzwerk für die Funktionsmodule derart, dass diese zum dezentralen Vorhalten initial festgelegter Identitäten und Adressen aller jeweils als Kommunikationspartner vorgesehener Funktionsmodule als Bestandteil der topologischen Daten und ferner zum eigenständigen Kommunikationsaufbau untereinander auf der Grundlage der derart festgelegten Identitäten und Adressen eingerichtet sind. Die Steuereinrichtung kann eine Verarbeitungseinheit umfassen, die mit einem digitalen Systemmodell der zugehörigen Behandlungsmaschine und/oder Produktionsanlage programmiert ist, in welchem zumindest ein Teil der initialen Konstruktions- und Spezifikationsdaten, der topologischen Daten sowie wenigstens zwei der folgenden Informationen jeweils betreffen wenigstens vier, insbesondere alle, am Produktfluss beteiligten Funktionsmodelle verarbeitet werden: Datenpunkte von Sensoren und Aktoren der Funktionsmodule sowie der zugehörigen Datenflüsse untereinander; Katalog mit obligatorischen und optionalen Funktionen der Funktionsmodule und mit gegenseitigen Abhängigkeiten ihrer Funktionsumfänge; Topologie der Funktionsmodule untereinander und bezüglich der sie umfassenden Behandlungsmaschinen und/oder Produktionsanlage; Schnittstellenanforderungen der Funktionsmodule; und Anforderungen zur Versorgung der Funktionsmodule mit elektrischer Energie, Medien und Verbrauchsmitteln.

Eine bevorzugte Ausführungsform der Erfindung ist zeichnerisch dargestellt. Es zeigen:
- Figur 1: eine schematische Darstellung einer Produktionsanlage mit Funktionsmodulen;
- Figur 2: das Schema eines Systemmodells mit Funktionsmodulen; und
- Figur 3: eine schematische Darstellung einer Steuereinrichtung eines Funktionsmoduls.

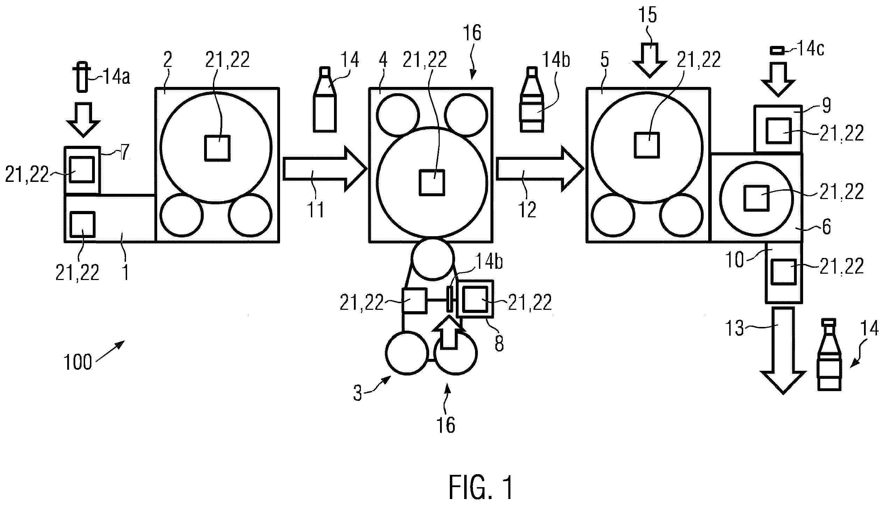

Wie die Figur 1 erkennen lässt, umfasst die beschriebene Produktionsanlage 100, bei der es sich im gezeigten Beispiel um eine Abfüllanlage handelt, mechatronische Funktionsmodule 1 bis 13 zum Herstellen, Behandeln und/oder intermodularen Transportieren von Behältern 14 für Flüssigprodukte 15, bei denen es sich insbesondere um Getränke handelt. Die Behälter 14 werden demnach aus Vorformlingen 14a streckgeblasen, mit Etiketten 14b ausgestattet, mit dem Flüssigprodukt 15 befüllt und mit Verschlusskappen 14c verschlossen.

Entsprechend dient ein erstes Funktionsmodul 1 dem Vorwärmen der Vorformlinge 14a und ein zweites Funktionsmodul 2 dem Streckblasen der Behälter 14 aus den Vorformlingen 14a und somit jeweils der Herstellung der Behälter 14. Ferner dienen ein drittes und viertes Behandlungsmodul 3, 4 der Etikettierung der Behälter 14 mit den Etiketten 14b, ein fünftes Funktionsmodul 5 dem Abfüllen des Flüssigprodukts 15 in den Behältern 14 und ein sechstes Funktionsmodul 6 dem Verschließen der befüllten Behälter 14 mit den Verschlusskappen 14c, und somit im Sinne der vorliegenden Erfindung jeweils dem Behandeln der Behälter 14.

Ein siebtes Funktionsmodul 7 dient der Inspektion der Vorformlinge 14a, ein achtes Funktionsmodul 8 der Inspektion der Etiketten 14b, ein neuntes Funktionsmodul 9 der Inspektion der Verschlusskappen 14c und ein zehntes Funktionsmodul 10 der Inspektion der befüllten und verschlossenen Behälter 14, und somit im Sinne der vorliegenden Erfindung jeweils der Inspektion der Behälter 14.

Schematisch angedeutet sind ferner Funktionsmodule 11 bis 13 zum intermodularen Transport der Behälter 14 in der Produktionsanlage 100, also zu / von / zwischen den Funktionsmodulen 1 bis 10.

Wie die Figur 1 ferner erkennen lässt, kann es sich bei den Funktionsmodulen 1 bis 13 um Behandlungsmaschinen, Behandlungsaggregate, Inspektionseinheiten und/oder Transportstrecken für die Behälter 14 handeln. So können beispielsweise das dritte Funktionsmodul 3 in Form eines Etikettieraggregat und das vierte Funktionsmodul 4 in Form eines Behälterkarussells einander zugeordnet sein und gemeinsam eine Behandlungsmaschine 16 ausbilden, im gezeigten Beispiel eine Etikettiermaschine.

Die dargestellte Produktionsanlage 100 ist hinsichtlich der Anzahl und der Typen der Funktionsmodule 1 bis 13 lediglich beispielhaft. Prinzipiell könnte die Produktionsanlage 100 Funktionsmodule folgender Modultypen umfassen: Heizmodul zum Erwärmen von Vorformlingen 14a oder Behälter 14; Streckblasmodul zum Ausformen der Behälter 14; Kühlmodul zum Kühlen der Behälter 14; Wendemodul zum Überkopfwenden der Behälter 14; Beschichtungsmodul zur Innenbeschichtung der Behälter 14; Druckmodul zum Bedrucken der Behälter 14; Etikettiermodul zum Etikettieren der Behälter 14; Inspektionsmodul zum Inspizieren der Behälter 14; Reinigungsmodul zum Reinigen der Behälter 14; Füllmodul zum Abfüllen der Flüssigprodukte 15 in die Behälter 14; und/oder Verschließmodul zum Verschließen der befüllten Behälter 14.

Ebenso kann es sich bei den Funktionsmodulen um folgende Modultypen handeln: Transportband, insbesondere mit Sklaven zur Aufnahme der Behälter 14; Linear-Transportsystem zum Transport der Behälter 14; Transportkarussell, insbesondere mit Behälterklammern zum Transport der Behälter 14; und/oder Umgehungs- Transportstrecke für die Behälter 14 zur Umgehung einzelner Produktionsprozesse / Funktionsmodule.

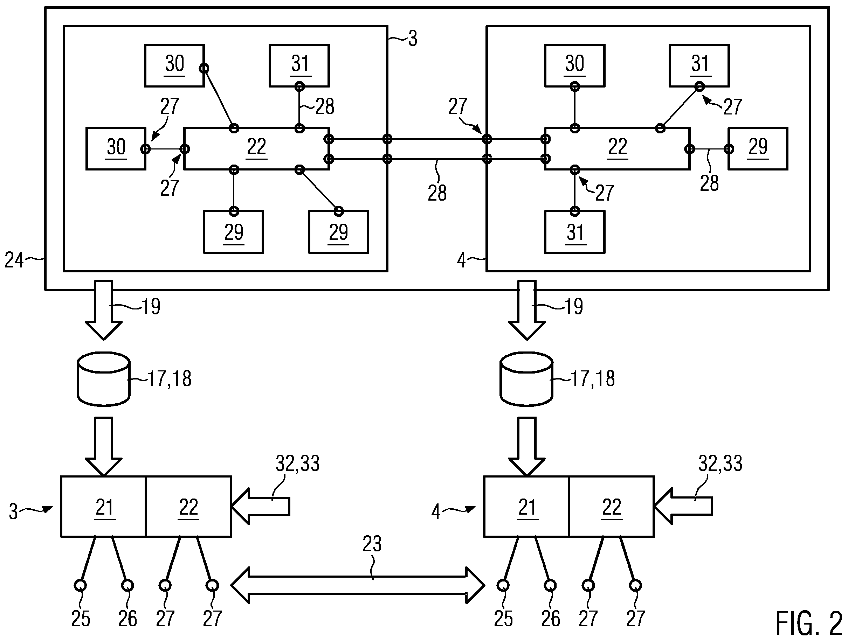

Die Figur 2 verdeutlicht schematisch das der vorliegenden Erfindung zugrundeliegende Prinzip einer bezüglich der Produktionsanlage 100 / der Behandlungsmaschine 16 jeweils dezentralen Speicherung und Verarbeitung initialer Konstruktionsdaten 17, initialer Spezifikationsdaten 18 der hier beispielhaft dargestellten Funktionsmodule 3, 4 und von topologischen Daten 19 wenigstens betreffend den Produktfluss in der Produktionsanlage 100 und die intermodulare Kommunikation in den jeweiligen Funktionsmodulen 3, 4.

Die Funktionsmodule 3, 4 umfassen zu diesem Zweck jeweils eine Speichereinrichtung 21 mit den darin jeweils in maschinell auslesbarer Form abgelegten initialen Konstruktionsdaten 17, den initialen Spezifikationsdaten 18 und den topologischen Daten 19. Ferner umfassen die Funktionsmodule 3, 4 jeweils eine elektronische Steuereinrichtung 22 zur Laufzeitsteuerung des jeweiligen Funktionsmoduls 3, 4 unter Einbeziehung der darin abgelegten Konstruktionsdaten 17, Spezifikationsdaten 18 und/oder topologischen Daten 19. Dies ist in der Figur 1 beispielhaft nur für die Funktionsmodule 1 bis 10 angedeutet.

Die topologischen Daten 19 ermöglichen einen eigenständigen Verbindungsaufbau 23 der Funktionsmodule 3, 4 untereinander und umfassen alle dafür nötigen Informationen der jeweils miteinander kommunizierenden Funktionsmodule 3, 4. Die topologischen Daten 19 umfassen vorzugsweise ferner Informationen darüber, welche der Funktionsmodule 1 bis 13 der Produktionsanlage 100 jeweils füreinander relevante und/oder priorisierte Kommunikationspartner sind. Im Beispiels der Figur 2 gilt dies beispielsweise für die in der Behandlungsmaschine 16 prozesstechnisch direkt zusammenwirkenden Funktionsmodule 3, 4.

Für den eigenständigen Verbindungsaufbau 23 sind alle dafür nötigen Informationen in einem Systemmodell 24 der zugehörigen Behandlungsmaschine 16 und/oder der Produktionsanlage 100 zusammengefasst und für alle beteiligten Funktionsmodule 1 bis 13 vorab so festgelegt, dass der Kommunikationsaufbau von den Funktionsmodulen 3, 4 nicht mehr im Sinne eines Online-Suchens in einem Netzwerk ausgehandelt werden muss. Hierzu sind beispielsweise im dritten Funktionsmodul 3 sowohl die Identität 25 als auch die Adresse 26 des vierten Funktionsmoduls 4 gespeichert und umgekehrt. Entsprechend verhält es sich für sämtliche Funktionsmodule 1 bis 13, die miteinander kommunizieren.

Ebenso werden in den Funktionsmodulen 3, 4 Informationen zu Datenpunkten 27 dezentral vorgehalten, die den Datenfluss 28 zwischen Aktoren 29, Sensoren 30, Frequenzumrichtern 31, Steuereinrichtungen 22 oder dergleichen Datenquellen oder Datenempfängern betreffen. Die entsprechenden Datenpunkte 27 / der Datenfluss 28 sind im Systemmodell 24 ebenso festgelegt.

Somit kann die nötige Information für den Kommunikationsaufbau 23 und den Datenfluss 28 aus dem Systemmodell 24 an sämtliche beteiligten Funktionsmodule 1 bis 13 vorab übertragen und dort vorgehalten werden können.

Das Systemmodell 24 dient somit als gemeinsame Datengrundlage, mit der den Funktionsmodulen 1 bis 13 sowohl Information über eigene Funktionen, Anforderungen und Leistungsumfang sowie entsprechende Informationen zu anderen Funktionsmodulen 1 bis 13 bereitgestellt wird, mit denen eine Wechselwirkung im Produktionsablauf besteht.

Zusätzlich können in den Funktionsmodulen 1 bis 13 jeweils individuell zugehörige aktuelle Zustandsdaten 32 der Funktionsmodule 1 bis 13 vorgehalten und verarbeitet werden, um die Funktionsmodule 1 bis 13 auch auf der Grundlage der aktuellen Zustandsdaten 32 zu steuern.

Ebenso ist es denkbar, in den Funktionsmodulen 1 bis 13 zusätzlich jeweils individuell zugehörige historische Daten 33 der Funktionsmodule 1 bis 13 vorzuhalten und zu verarbeiten, um die Funktionsmodule 1 bis 13 dann auch auf der Grundlage von aus mehreren Produktionsabläufen / Chargen angesammelten historischen Daten 32 zu steuern.

Ein entsprechender Datenfluss 28 ist auf der Grundlage des beschriebenen Kommunikationsaufbaus 23 zwischen den einzelnen Funktionsmodulen 1 bis 13 aber auch innerhalb der einzelnen Funktionsmodule 1 bis 13 ebenso auf der Grundlage des Systemmodells 24 möglich.

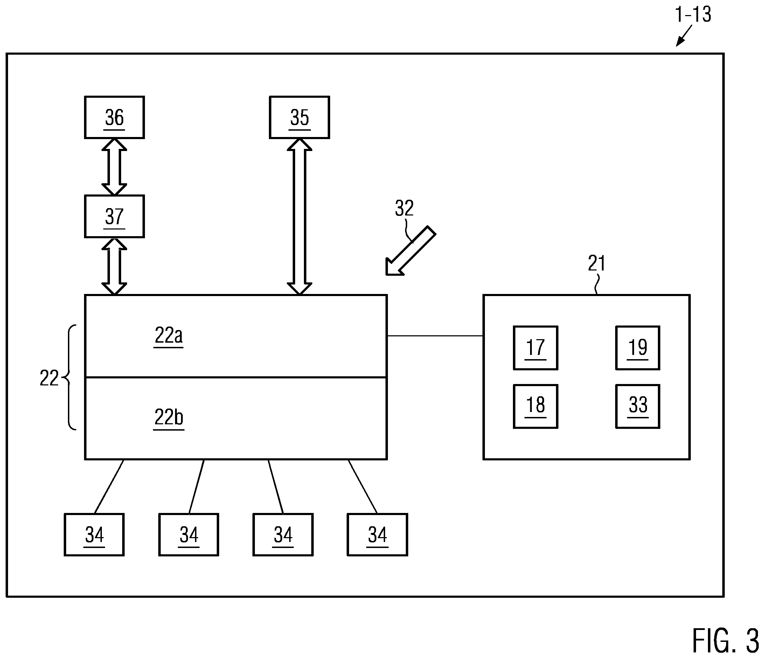

Die Figur 3 verdeutlich schematisch ein Beispiel für die dezentrale Steuerung in den Funktionsmodulen 1 bis 13. Demnach kann die Steuereinrichtung 22 des jeweiligen Funktionsmoduls 1 bis 13 eine Verarbeitungseinheit 22a mit Internet-of-Things-Funktionalität umfassen und ein Application-Programming-Interface 22b, mit dem beispielsweise Funktionen einzelner Funktionsmodule 1 bis 13 aufgerufen werden können sowie Daten gelesen und geschrieben werden können.

Ebenso ist eine Anbindung der einzelnen Module 1 bis 13 an externe Datenverarbeitungs-Bausteine 34 möglich, wie beispielsweise an eine Cloud, einen E-Shop, ein Mensch-Maschine-Interface, einen Fehleranalyse-Service oder dergleichen.

Der jeweiligen Steuereinrichtung 22 werden hierzu die beschriebenen initialen Konstruktions- und Spezifikationsdaten 17, 18 und die topologischen Daten 19 bereitgestellt, gegebenenfalls auch die aktuellen Zustandsdaten 32 sowie die historischen Daten 33. Die Internet-of-Things-Komponente 22a kann dann beispielsweise mit Herstellerapplikationen 35 und/oder Anwenderapplikationen 36 gegebenenfalls über zwischengeschaltete Treiber 37 auf prinzipiell bekannte Weise zusammenarbeiten.

Auf der Grundlage der initialen Konstruktions- und Spezifikationsdaten 17, 18 und der insbesondere initialen topologischen Daten 19 können gegebenenfalls unter Einbeziehung der aktuellen Zustandsdaten 32 und/oder der historischen Daten 33 autarke Modulfunktionen der folgenden Typen in den jeweiligen Funktionsmodulen 1 bis 13 implementiert werden: Selbstkonfiguration; Selbstdiagnose; Selbstorganisation; Selbstoptimierung; Selbstschutz und/oder Selbstheilung.

Das heißt, auf die beschriebene Weise wird den Funktionsmodulen 1 bis 13 vorzugsweise so viel Kenntnis über sich selbst im Sinne einer Funktionsidentität, eines Funktionsumfangs und der diesbezüglichen Wechselwirkungen mit anderen Funktionsmodulen 1 bis 13 bereitgestellt, dass ein maschinelles Selbstbewusstsein und die Eigenschaft zur maschinellen Selbstveränderung entstehen, woraus dann die Fähigkeit zur Selbstkonfiguration des jeweiligen Funktionsmoduls 1 bis 13 resultieren kann.

Die beschriebene dezentrale Steuerung und der zugehörige dezentrale Kommunikationsaufbau der Funktionsmodule 1 bis 13 untereinander ermöglicht nicht nur die autarke Instandhaltung und Optimierung von Produktionsprozessen an den einzelnen Funktionsmodulen 1 bis 13 für sich genommen, sondern auch die komplexe Optimierung des Produktionsablaufs im Zusammenspiel der in den Funktionsmodulen 1 bis 13 ablaufenden Produktionsprozesse miteinander.

Das heißt, die einzelnen Funktionsmodule 1 bis 13 kennen vorzugsweise alle ihre funktionsrelevanten Komponenten und Kommunikationspartner, also alle dafür relevante Funktionsmodule 1 bis 13 und/oder Behandlungsmaschinen 16 der Produktionsanlage 100, und zusätzlich ferner den Produktfluss durch die Produktionsanlage 100, vorzugsweise aus dem gemeinsamen Systemmodell 24, und können auf dieser Grundlage eigenständig Anpassungen vornehmen, beispielsweise zur Reduktion eines Energieverbrauchs, zur Reaktion auf geänderte Betriebsbedingungen in anderen Funktionsmodulen 1 bis 13 der Produktionsanlage 100, zur Qualitätssicherung, zur Materialversorgung, zur Anpassung von Instandhaltungszyklen, Reinigungszyklen, des Produktionsablaufs oder dergleichen.

Derartige Anpassungen erfolgen während der Laufzeitsteuerung des Produktionsprozesses in der Produktionsanlage 100 durch die einzelnen Steuereinrichtungen 22 der Funktionsmodule 1 bis 13 in dem Sinne, dass alle dafür jeweils nötigen Informationen in Form maschinenlesbarer Daten 17 ,18, 19 in den jeweiligen Funktionsmodulen 1 bis 13 dezentral verarbeitet werden können, beispielsweise unter Einbeziehung aktueller Zustandsdaten 32 der jeweils beteiligten Funktionsmodule 1 bis 13.

## Patentansprüche

1. Verfahren zum Betreiben mechatronischer Funktionsmodule (1 -13) zum Herstellen, Behandeln, Inspizieren und/oder intermodularen Transportieren von Behältern (14) für Flüssigprodukte (15), insbesondere Getränke, in einer Produktionsanlage (100), insbesondere Abfüllanlage, wobei man in den Funktionsmodulen jeweils individuell zugehörige initiale Konstruktions- und Spezifikationsdaten (17, 18) und initiale topologische Daten (19) wenigstens betreffend den Produktfluss in der Produktionsanlage und die Kommunikation zwischen den Funktionsmodulen in maschinell auslesbarer Form vorhält, wobei die initialen topologischen Daten (19) zum eigenständigen Verbindungsaufbau (23) der Funktionsmodule (1 - 13) untereinander wenigstens Informationen betreffend ihre Identität (25) und Adresse (26) umfassen, und wobei die Funktionsmodule unter Einbeziehung der initialen topologischen Daten und vorzugsweise der initialen Konstruktionsdaten und/oder Spezifikationsdaten gesteuert werden.

2. Verfahren nach Anspruch 1, wobei die topologischen Daten (19) zum eigenständigen Verbindungsaufbau (23) der Funktionsmodule (1 - 13) untereinander ferner Informationen darüber umfassen, welche der Funktionsmodule jeweils füreinander relevante und/oder priorisierte Kommunikationspartner sind.

3. Verfahren nach Anspruch 1 oder 2, wobei die initialen Konstruktions- und Spezifikationsdaten (17, 18) wenigstens zwei der folgenden Informationen enthalten: ein 3D-CAD-Modell des Funktionsmoduls (1 - 13); ein 3D-Modell zur Finite-Elemente-Simulation und/oder Simulation von Frequenzverhalten im Funktionsmodul; einen elektrischen Schaltplan des Funktionsmoduls und technische Spezifikationen zugehöriger Bauteile; elektrische Verbindungen von Baugruppen des Funktionsmoduls; ein R&I-Fließschema der zugehörigen Behandlungsmaschine und/oder Produktionsanlage und technische Spezifikationen zugehöriger Funktionselemente und deren gegenseitiger Abhängigkeiten; einen Anordnungsplan der zugehörigen Behandlungsmaschine und/oder Produktionsanlage und technische Spezifikationen zugehöriger Maschinenteile / Anlagenteile; Stücklisten mechanischer, elektrischer, pneumatischer und/oder hydraulischer Bauteile des Funktionsmoduls; technische Spezifikationen der zu verarbeitenden Behälter mit zugehörigen Ausstattungsobjekten, Hilfsstoffen und/oder Abfüllprodukten; Instandhaltungsdokumentation des Funktionsmoduls, der zugehörigen Behandlungsmaschine und/oder Produktionsanlage; und Spezifikation des Lebenszyklus des Funktionsmoduls.

4. Verfahren nach wenigstens einem der vorigen Ansprüche, wobei zumindest ein Teil der initialen Konstruktions- und Spezifikationsdaten (17, 18) sowie der topologischen Daten (19) in einem digitalen Systemmodell (24) der zugehörigen Behandlungsmaschine (16) und/oder Produktionsanlage (100) zusammengefasst werden, wobei das Systemmodell wenigstens vier, insbesondere alle, am Produktfluss beteiligte Funktionsmodelle (1 - 13) umfasst und wenigstens zwei der folgenden Informationen verarbeitet: Datenpunkte (27) von Sensoren (29) und Aktoren (30) der Funktionsmodule sowie des zugehörigen Datenflusses (28) untereinander; Katalog mit obligatorischen und optionalen Funktionen der Funktionsmodule und mit gegenseitigen Abhängigkeiten ihrer Funktionsumfänge; Topologie der Funktionsmodule untereinander und bezüglich der zugehörigen Behandlungsmaschinen (16) und/oder der Produktionsanlage (100); Schnittstellenanforderungen der Funktionsmodule; und Anforderungen zur Versorgung der Funktionsmodule mit elektrischer Energie, Medien und Verbrauchsmitteln.

5. Verfahren nach wenigstens einem der vorigen Ansprüche, wobei man in den Funktionsmodulen (1 -13) ferner jeweils individuell zugehörige aktuelle Zustandsdaten (32) der Funktionsmodule vorhält und/oder verarbeitet, wobei die Funktionsmodule unter Einbeziehung der aktuellen Zustandsdaten gesteuert werden, und wobei diese wenigstens zwei der folgenden Informationen enthalten: aktueller Betriebszustand, aktuelle Betriebsart und/oder aktuelle Störungen des Funktionsmoduls; Bedienerhinweise und/oder Bedieneraufgaben; aktuelle Prognosen zu Materialbedarf und/oder Wartungszeitpunkten; aktuelle Handlungsempfehlungen zur Produktionssteuerung; aktuelle Software-Versionsdaten; aktuelle Diagnosedaten; aktuelle Anwendungsdaten, insbesondere aktueller Energie- und Medienverbrauch und/oder Wirkungsgrad.

6. Verfahren nach wenigstens einem der vorigen Ansprüche, wobei man in den Funktionsmodulen (1 - 13) ferner jeweils individuell zugehörige historische Daten (33) der Funktionsmodule vorhält und/oder verarbeitet, wobei die Funktionsmodule unter Einbeziehung der historischen Daten gesteuert werden, und wobei diese wenigstens zwei der folgenden Informationen enthalten: Elektronisches Logbuch des Funktionsmoduls; Kl-Trainingsparametersätze; Kl-Lernergebnisse; Grenzwerte von Maschinenparametern und zugehörige Betriebszustände; Schaltspiele; Lastwechsel; Temperaturverläufe; Kommunikationsauslastung; Kl-Erfahrungswissen aus Interaktionen mit Bedienern; Ursache-Fehler-Zusammenhänge; Langzeitdaten zu Energie- und Medienverbrauch und/oder Wirkungsgrad.

7. Verfahren nach wenigstens einem der vorigen Ansprüche, wobei sich die Funktionsmodule (1 - 13) auf der Grundlage der individuell zugehörigen initialen Konstruktions- und Spezifikationsdaten (17) sowie der topologischen Daten (19) steuerungstechnisch jeweils selbstständig konfigurieren, diagnostizieren, organisieren, optimieren, schützen und/oder heilen.

8. Produktionsanlage (100), insbesondere Abfüllanlage, mit mechatronischen Funktionsmodulen (1 - 13) zum Herstellen, Behandeln, Inspizieren und/oder intermodularen Transportieren von Behältern (14) für Flüssigprodukte (15), insbesondere Getränke, wobei die Funktionsmodule jeweils umfassen: eine Speichereinrichtung (21) mit darin jeweils maschinell auslesbar abgelegten, individuell zugehörigen initialen Konstruktions- und Spezifikationsdaten (17, 18) des Funktionsmoduls und topologischen Daten (19) wenigstens betreffend den Produktfluss in der Produktionsanlage und die Kommunikation zwischen den Funktionsmodulen, wobei die topologischen Daten (19) zum eigenständigen Verbindungsaufbau (23) der Funktionsmodule (1 - 13) untereinander wenigstens Informationen betreffend ihre Identität (25) und Adresse (26) umfassen; und eine Steuereinrichtung (22) eingerichtet zur Laufzeitsteuerung des Funktionsmoduls unter Einbeziehung der topologischen Daten und vorzugsweise der initialen Konstruktionsdaten und/oder Spezifikationsdaten gemäß dem Verfahren nach wenigstens einem der vorigen Ansprüche.

9. Produktionsanlage nach Anspruch 8, wobei die Funktionsmodule (1 - 10) wenigstens zwei der folgenden Modultypen umfassen: Heizmodul zum Erwärmen von Vorformlingen oder Behältern; Streckblasmodul zum Ausformen der Behälter; Kühlmodul zum Kühlen der Behälter; Wendemodul zum Überkopfwenden der Behälter; Beschichtungsmodul zur Innenbeschichtung der Behälter; Druckmodul zum Bedrucken der Behälter; Etikettiermodul zum Etikettieren der Behälter; Inspektionsmodul zum Inspizieren der Behälter; Reinigungsmodul zum Reinigen der Behälter; Füllmodul zum Abfüllen der Flüssigprodukte in die Behälter; und/oder Verschließmodul zum Verschließen der befüllten Behälter.

10. Produktionsanlage nach Anspruch 9, wobei die Funktionsmodule (10 - 13) ferner wenigstens einen der folgenden Modultypen umfassen: Transportband insbesondere mit Sklaven zur Behälteraufnahme; Linearmotor-Transportsystem; Transportkarussell insbesondere mit Behälterklammern; und Umgehungs-Transportstrecke.

11. Produktionsanlage nach wenigstens einem der Ansprüche 8 bis 10, wobei die Steuereinrichtung (22) eine Verarbeitungseinheit (22a), insbesondere mit Internet-of-Things-Funktionalität, umfasst, die zur Verarbeitung der initialen Konstruktions- und Spezifikationsdaten (17, 18) des Funktionsmoduls (1 - 13) und topologischen Daten (19) und insbesondere von individuell zugehörigen aktuellen Zustandsdaten (32) des Funktionsmoduls und/oder individuell zugehörigen historischen Daten (33) des Funktionsmoduls programmiert ist.

12. Produktionsanlage nach wenigstens einem der Ansprüche 8 bis 11, wobei die Funktionsmodule (1 -13) zum dezentralen Vorhalten initial festgelegter Identitäten (25) und Adressen (26) aller jeweils als Kommunikationspartner vorgesehener Funktionsmodule als Bestandteil der topologischen Daten (19) und ferner zum eigenständigen Kommunikationsaufbau (23) untereinander auf der Grundlage der derart festgelegten Identitäten und Netzwerkadressen eingerichtet sind.

13. Produktionsanlage nach wenigstens einem der Ansprüche 8 bis 12, wobei die Steuereinrichtung (22) eine Verarbeitungseinheit (22a) umfasst, die mit einem digitalen Systemmodell (24) der zugehörigen Behandlungsmaschine (16) und/oder Produktionsanlage (100) programmiert ist, in dem zumindest ein Teil der initialen Konstruktions- und Spezifikationsdaten (17, 18), der topologischen Daten (19) sowie wenigstens zwei der folgenden Informationen jeweils betreffend wenigstens vier, insbesondere alle, am Produktfluss beteiligten Funktionsmodelle (1 -13) verarbeitet werden: Datenpunkte (27) von Sensoren (29) und Aktoren (30) der Funktionsmodule sowie der zugehörigen Datenflüsse (28) untereinander; Katalog mit obligatorischen und optionalen Funktionen der Funktionsmodule und mit gegenseitigen Abhängigkeiten ihrer Funktionsumfänge; Topologie der Funktionsmodule und der zugehörigen Behandlungsmaschinen und/oder Produktionsanlage; Schnittstellenanforderungen der Funktionsmodule; und Anforderungen zur Versorgung der Funktionsmodule mit elektrischer Energie, Medien und Verbrauchsmitteln.

## Claims

1. A method for operating mechatronic functional modules (1-13) for producing, treating, inspecting and/or intermodularly transporting containers (14) for liquid products (15), in particular beverages, in a production plant (100), in particular a filling plant, wherein individually associated initial design and specification data (17, 18) and initial topological data (19) at least concerning the product flow in the production plant and the communication between the functional modules are maintained in machine-readable form, wherein the initial topological data (19) for independently establishing a connection (23) between the functional modules (1-13) comprise at least information concerning their identity (25) and address (26), and wherein the functional modules are controlled by including the initial topological data and preferably the initial design data and/or specification data.

2. The method according to claim 1, wherein the topological data (19) for independently establishing a connection (23) between the functional modules (1-13) further comprise information regarding which of the functional modules are relevant and/or prioritized communication partners for each other.

3. The method according to claim 1 or 2, wherein the initial design and specification data (17, 18) include at least two of the following pieces of information: a 3D CAD model of the functional module (1-13); a 3D model for finite element simulation and/or simulation of frequency behavior in the functional module; an electrical circuit diagram of the functional module and technical specifications of associated components; electrical connections of assemblies of the functional module; a P&I diagram of the associated treatment machine and/or production plant and technical specifications of associated functional elements and their mutual dependencies; a layout plan of the associated treatment machine and/or production plant and technical specifications of associated machine parts / plant components; parts lists of mechanical, electrical, pneumatic and/or hydraulic components of the functional module; technical specifications of the containers to be processed with associated equipment objects, auxiliary materials and/or filling products; maintenance documentation of the functional module, the associated treatment machine and/or production plant; and specification of the life cycle of the functional module.

4. The method according to at least one of the preceding claims, wherein at least part of the initial design and specification data (17, 18) as well as the topological data (19) are combined in a digital system model (24) of the associated treatment machine (16) and/or production plant (100), wherein the system model comprises at least four, in particular all, functional models (1-13) involved in the product flow and processes at least two of the following pieces of information: data points (27) of sensors (29) and actuators (30) of the functional modules as well as the associated data flow (28) among each other; catalog with mandatory and optional functions of the functional modules and with mutual dependencies of their functional ranges; topology of the functional modules among each other and with regard to the associated treatment machines (16) and/or the production plant (100); interface requirements of the functional modules; and requirements for supplying the functional modules with electrical energy, media and consumables.

5. The method according to at least one of the preceding claims, wherein in the functional modules (1-13) current status data (32) individually associated with the functional modules are further maintained and/or processed, wherein the functional modules are controlled by including the current status data, and wherein these contain at least two of the following pieces of information: current operating status, current operating mode and/or current malfunctions of the functional module; operator instructions and/or operator tasks; current predictions of material requirements and/or maintenance times; current recommended actions for production control; current software version data; current diagnostic data; current application data, in particular current energy and media consumption and/or efficiency.

6. The method according to at least one of the preceding claims, wherein in the functional modules (1-13) historical data (33) individually associated with the functional modules are further maintained and/or processed, wherein the functional modules are controlled by including the historical data, and wherein these contain at least two of the following pieces of information: Electronic logbook of the functional module; Al training parameter sets; Al learning results; limit values of machine parameters and associated operating states; switching cycles; load changes; temperature curves; communication utilization; Al knowledge from interactions with operators; cause-error-relationships; long-term data on energy and media consumption and/or efficiency.

7. The method according to at least one of the preceding claims, wherein the functional modules (1-13) each independently configure, diagnose, organize, optimize, protect and/or heal themselves in terms of control technology on the basis of the individually associated initial design and specification data (17) and the topological data (19).

8. A production plant (100), in particular filling plant, having mechatronic functional modules (1-13) for producing, treating, inspecting and/or intermodularly transporting containers (14) for liquid products (15), in particular beverages, the functional modules each comprising: a memory device (21) with individually associated initial design and specification data (17, 18) of the functional module and topological data (19) stored therein in a machine-readable manner, at least concerning the product flow in the production plant and the communication between the functional modules, wherein the topological data (19) for independently establishing a connection (23) between the functional modules (1-13) comprise at least information concerning their identity (25) and address (26); and a control device (22) adapted for runtime control of the functional module by including the topological data and preferably the initial design data and/or specification data according to the method of at least one of the preceding claims.

9. The production plant according to claim 8, wherein the functional modules (1-10) comprise at least two of the following module types: a heating module for heating preforms or containers; a stretch blow molding module for shaping the containers; a cooling module for cooling the containers; a turning module for turning the containers upside down; a coating module for coating the inside of the containers; a printing module for printing on the containers; a labeling module for labeling the containers; an inspection module for inspecting the containers; a cleaning module for cleaning the containers; a filling module for filling the liquid products into the containers; and/or a capping module for capping the filled containers.

10. The production plant according to claim 9, wherein the functional modules (10-13) further comprise at least one of the following module types: conveyor belt, in particular with slave units for holding containers; linear motor transport system; transport carousel, in particular with container clamps; and bypass transport section.

11. The production plant according to at least one of claims 8 to 10, wherein the control device (22) comprises a processing unit (22a), in particular with Internet-of-Things functionality, which is programmed to process the initial design and specification data (17, 18) of the functional module (1-13) and topological data (19) and in particular individually associated current status data (32) of the functional module and/or individually associated historical data (33) of the functional module.

12. The production plant according to at least one of claims 8 to 11, wherein the functional modules (1-13) are adapted for the decentralized maintaining of initially defined identities (25) and addresses (26) of all functional modules respectively provided as communication partners as part of the topological data (19) and further for independently establishing communication (23) between each other on the basis of identities and network addresses defined in this way.

13. The production plant according to at least one of claims 8 to 12, wherein the control device (22) comprises a processing unit (22a) programmed with a digital system model (24) of the associated treatment machine (16) and/or production plant (100), in which at least part of the initial design and specification data (17, 18), the topological data (19) and at least two of the following pieces of information are processed, each concerning at least four, in particular all, functional models (1-13) involved in the product flow: data points (27) of sensors (29) and actuators (30) of the functional modules as well as associated data flows (28) among each other; catalog with mandatory and optional functions of the functional modules and with mutual dependencies of their functional ranges; topology of the functional modules and the associated treatment machines and/or production plant; interface requirements of the functional modules; and requirements for supplying the functional modules with electrical energy, media and consumables.

## Revendications

1. Procédé de fonctionnement de modules fonctionnels mécatroniques (1-13) pour la fabrication, le traitement, l'inspection et/ou le transport intermodal de récipients (14) pour des produits liquides (15), en particulier pour des boissons, dans une installation de production (100), en particulier une installation de remplissage, dans lequel des données de construction et de spécification initiales (17, 18) et des données topologiques initiales (19) associées individuelles concernant au moins le flux de production dans l'installation de production et la communication entre les modules fonctionnels sous une forme lisible par une machine sont stockées dans les modules fonctionnels individuels respectifs, dans lequel les données topologiques initiales (19) pour l'établissement indépendant de connexions (23) entre les modules fonctionnels (1-13) comprennent au moins des informations concernant leur identité (25) et leur adresse (26), et dans lequel les modules fonctionnels sont contrôlés en intégrant les données topologiques initiales et de préférence les données de construction et/ou de spécification initiales.

2. Procédé selon la revendication 1, dans lequel les données topologiques (19) pour l'établissement indépendant de connexions (23) entre les modules fonctionnels (1-13) comprennent en outre des informations concernant quels modules fonctionnels sont des partenaires de communication pertinents et/ou prioritaires respectifs.

3. Procédé selon la revendication 1 ou 2, dans lequel les données de construction et de spécification initiales (17, 18) comprennent au moins deux des informations suivantes : un modèle CAO en 3D du module fonctionnel (1-13) ; un modèle en 3D pour la simulation par éléments finis et/ou la simulation du comportement fréquentiel du module fonctionnel ; un schéma des circuits électriques du module fonctionnel et les spécifications techniques des composants associés ; les connexions électriques des assemblages du module fonctionnel ; un schéma de tuyauterie et d'instrumentation de la machine de traitement et/ou de l'installation de production associées, ainsi que les spécifications techniques des éléments fonctionnels associés et leurs interdépendances ; un plan d'implantation de la machine de traitement et/ou de l'installation de production associées, ainsi que les spécifications techniques des composants de machine/ d'installation associés ; les listes de pièces des composants mécaniques, électriques, pneumatiques et/ou hydrauliques du module fonctionnel ; les spécifications techniques des récipients à traiter avec les équipements, matériaux auxiliaires et/ou produits de remplissage associés ; la documentation de maintenance du module fonctionnel, de la machine de traitement et/ou de l'installation de production associées ; et la spécification du cycle de vie du module fonctionnel.

4. Procédé selon au moins l'une des revendications précédentes, dans lequel les données de construction et de spécification initiales (17, 18) et les données topologiques (19) sont rassemblées au moins partiellement dans un modèle de système numérique (24) de la machine de traitement (16) et/ou de l'installation de production (100) associées, dans lequel le modèle de système comprend au moins quatre des modèles fonctionnels (1-13) impliqués dans le flux de production, et en particulier tous ces modèles, et traite au moins deux des informations suivantes : les points de données (27) des capteurs (29) et des actionneurs (30) des modules fonctionnels, ainsi que le flux de données associé (28) entre lesdits modules ; un catalogue des fonctions obligatoires et optionnelles des modules fonctionnels et des dépendances mutuelles de leurs portées fonctionnelles ; la topologie des modules fonctionnels entre eux et par rapport aux machines de traitement (16) et/ou à l'installation de production (100) associées ; les exigences d'interface des modules fonctionnels ; et les exigences d'alimentation des modules fonctionnels en énergie électrique, en fluides et en consommables.

5. Procédé selon au moins l'une des revendications précédentes, dans lequel les modules fonctionnels (1-13) stockent et/ou traitent en outre les données d'état actuelles (32) associées individuelles respectives des modules fonctionnels, dans lequel les modules fonctionnels sont contrôlés en intégrant les données d'état actuelles, et dans lequel ces données contiennent au moins deux des informations suivantes : l'état opérationnel actuel, le type opérationnel actuel et/ou les dysfonctionnements actuels du module fonctionnel ; les instructions et/ou tâches d'opérateur ; les prévisions actuelles des besoins en matériaux et/ou des interventions de maintenance ; les recommandations d'action actuelles pour le contrôle de la production ; les données de version actuelles du logiciel ; les données de diagnostic actuelles ; les données d'utilisation actuelles, en particulier les consommations d'énergie et de fluides et/ou les rendements actuels.

6. Procédé selon au moins l'une des revendications précédentes, dans lequel les modules fonctionnels (1-13) stockent et/ou traitent en outre les données historiques (33) associées individuelles relatives aux modules fonctionnels, dans lequel les modules fonctionnels sont contrôlés en intégrant les données historiques, et dans lequel ces données contiennent au moins deux des informations suivantes : un journal électronique du module fonctionnel ; des jeux de paramètres d'entraînement d'IA ; des résultats d'apprentissage d'IA ; des valeurs limites des paramètres de machine et des états de fonctionnement associés ; des cycles de commutation ; des variations de charge ; des profils de température ; l'utilisation de la communication ; des données expérimentales de l'IA issues des interactions avec les utilisateurs ; des relations causales des dysfonctionnements ; des données à long terme sur les consommations d'énergie et de fluides et/ou les rendements.

7. Procédé selon au moins l'une des revendications précédentes, dans lequel les modules fonctionnels (1-13) se configurent, se diagnostiquent, s'organisent, s'optimisent, se protègent et/ou se réparent chacun indépendamment par un système de contrôle sur la base des données de construction et de spécification initiales (17) associées individuelles respectives ainsi que des données topologiques (19).

8. Installation de production (100), en particulier installation de remplissage, avec des modules fonctionnels mécatroniques (1 à 13) pour la fabrication, le traitement, l'inspection et/ou le transport intermodal de récipients (14) pour des produits liquides (15), en particulier pour des boissons, dans lequel les modules fonctionnels respectifs comprennent : un dispositif de stockage (21) contenant, enregistrées de manière lisible par une machine, des données de construction et de spécification initiales (17, 18) associées individuelles respectives du module fonctionnel, et des données topologiques (19) concernant au moins le flux de production dans l'installation de production et la communication entre les modules fonctionnels, dans lequel les données topologiques (19) pour l'établissement indépendant de connexions (23) entre les modules fonctionnels (1 à 13) comprennent au moins des informations concernant leur identité (25) et leur adresse (26) ; et un dispositif de commande (22) configuré pour la commande de temps de marche du module fonctionnel, prenant en compte les données topologiques, et de préférence les données de construction et/ou de spécification initiales, conformément au procédé selon au moins l'une des revendications précédentes.

9. Installation de production selon la revendication 8, dans laquelle les modules fonctionnels (1-10) comprennent au moins deux des types de modules suivants : un module de chauffage pour chauffer des ébauches ou des récipients ; un module de soufflage-étirage pour former les récipients ; un module de refroidissement pour refroidir les récipients ; un module de retournement pour retourner les récipients verticalement ; un module de revêtement pour revêtir l'intérieur des récipients ; un module d'impression pour imprimer les récipients ; un module d'étiquetage pour étiqueter les récipients ; un module d'inspection pour inspecter les récipients ; un module de nettoyage pour nettoyer les récipients ; un module de remplissage pour remplir les récipients avec les produits liquides ; et/ou un module de fermeture pour fermer les récipients remplis.

10. Installation de production selon la revendication 9, dans laquelle les modules fonctionnels (10-13) comprennent en outre au moins l'un des types de modules suivants : une bande transporteuse, en particulier avec des enclaves pour l'admission de récipients ; un système de transport à moteur linéaire ; un carrousel de transport, en particulier avec des pinces à récipients ; et une voie de transport de contournement.

11. Installation de production selon au moins l'une des revendications 8 à 10, dans laquelle le dispositif de commande (22) comprend une unité de traitement (22a), en particulier dotée de fonctionnalités pour l'Internet des objets, programmée pour traiter les données de construction et de spécification initiales (17, 18) du module fonctionnel (1-13) et les données topologiques (19), et en particulier les données d'état actuel (32) associées individuelles du module fonctionnel et/ou les données historiques (33) associées individuelles du module fonctionnel.

12. Installation de production selon au moins l'une des revendications 8 à 11, dans laquelle les modules fonctionnels (1-13) sont configurés pour le stockage décentralisé des identités (25) et adresses (26) initialement définies de tous les modules fonctionnels respectifs pourvus chacun comme un partenaire de communication, comme composants des données topologiques (19), et en outre pour l'établissement indépendant d'une communication (23) entre eux sur la base des identités et adresses réseau ainsi définies.

13. Installation de production selon au moins l'une des revendications 8 à 12, dans laquelle le dispositif de commande (22) comprend une unité de traitement (22a) programmée avec un modèle de système numérique (24) de la machine de traitement (16) et/ou de l'installation de production (100) associées, dans laquelle sont traitées au moins partiellement les données de construction et de spécification initiales (17, 18), les données topologiques (19), ainsi qu'au moins deux des informations suivantes respectives concernant au moins quatre modèles fonctionnels (1-13) impliqués dans le flux de production, et en particulier tous ces modèles : les points de données (27) des capteurs (29) et des actionneurs (30) des modules fonctionnels ainsi que les flux de données associés (28) entre eux ; un catalogue des fonctions obligatoires et optionnelles des modules fonctionnels et des dépendances mutuelles de leurs portées fonctionnelles ; la topologie des modules fonctionnels et des machines de traitement et/ou de l'installation de production associées ; les exigences d'interface des modules fonctionnels ; et les exigences d'alimentation des modules fonctionnels en énergie électrique, en fluides et en consommables.
